# EUROPÄISCHE PATENTSCHRIFT

(11) **EP 3 856 446 B1**
(45) Veröffentlichungstag und Bekanntmachung des Hinweises auf die Patenterteilung: **09.11.2022**
(21) Anmeldenummer: 19782488.1
(22) Anmeldetag: 23.09.2019
(51) Int. Cl.: B23K 26/00, B23K 26/082, B23K 26/354, B23K 26/352, B24B 1/00, B29C 64/30, B29C 64/35, B23K 101/18, B23K 103/00

(54) **VERFAHREN ZUM GLÄTTEN DER OBERFLÄCHE EINES KUNSTSTOFFBAUTEILS**
METHOD FOR SMOOTHING THE SURFACE OF A PLASTIC COMPONENT
PROCÉDÉ POUR LISSER LA SURFACE D'UNE PIÈCE PLASTIQUE

(30) Priorität: 24.09.2018 DE 102018216206
(43) Veröffentlichungstag der Anmeldung: 04.08.2021
(73) Patentinhaber: Fraunhofer-Gesellschaft zur Förderung der angewandten Forschung e.V., 80686 München (DE)
(72) Erfinder: BRAUN, Karsten, 52074 Aachen (DE); WILLENBORG, Edgar, 52074 Aachen (DE); WEINGARTEN, Christian, 52074 Aachen (DE)
(74) Vertreter: Gagel, Roland
(86) Internationale Anmeldenummer: PCT/EP2019/075528
(87) Internationale Veröffentlichungsnummer: WO 2020/064635

(56) Entgegenhaltungen:
- WO-A1-2017/192140
- CN-A- 106 695 124
- JP-A- 2004 052 074

## Beschreibung

### Technisches Anwendungsgebiet

Die vorliegende Erfindung betrifft ein Verfahren zum Glätten eines Oberflächenbereichs eines Kunststoffbauteils, insbesondere eines additiv gefertigten Kunststoffbauteils gemäß dem Oberbegriff des Anspruchs 1 (siehe z.B. WO 2017 192140 A1).

Für die additive Fertigung von Kunststoffbauteilen werden heutzutage hauptsächlich zwei Verfahren eingesetzt, das SLS-Verfahren (SLS: Selective Laser Sintering) und das FDM-Verfahren (FDM: Fused Deposition Modelling), auch unter den Begriffen FFF- oder FLM-Verfahren bekannt. Die Oberfläche additiv gefertigter Kunststoffbauteile weist allerdings eine für viele Anwendungen unzureichende Oberflächenqualität auf. Störfaktoren sind zum einen Poren, die durch die Aufbaustrategie der additiven Fertigung entstehen, und zum anderen eine hohe Oberflächenrauheit. Beide Faktoren haben negativen Einfluss sowohl auf die Optik der Oberfläche als auch auf die Funktion, wenn beispielsweise tribologische oder lackierbare Oberflächen benötigt werden. Daher ist häufig ein Oberflächenfinish der additiv gefertigten Kunststoffbauteile erforderlich, das die Oberflächenqualität der Bauteile erhöht.

### Stand der Technik

Zur Glättung der Oberflächen von additiv gefertigten Kunststoffbauteilen sind unterschiedliche Verfahren bekannt, beispielsweise chemisches Ätzen, manuelles Schleifen und Polieren oder das Gleitschleifen. Jedes dieser Verfahren bringt jedoch gewisse Nachteile mit sich. Glättung durch chemische Ätzverfahren, beispielsweise mit Acetondampf oder mit Isopropylalkohol, schädigt zum einen den Kunststoff und stellt zum anderen hohe Ansprüche an den Arbeits- und Explosionsschutz. Des Weiteren ist eine aufwändige Nachreinigung des Bauteils erforderlich. Das manuelle Schleifen und Polieren ist vor allem zeit- und kostenaufwändig. Außerdem können die Schleif- oder Poliermittel in die Oberfläche eingearbeitet werden, was sich wiederum negativ auf die Qualität auswirken kann. Beim Gleitschleifen werden Kanten und Ecken durch den Prozess verrundet. Auch hier können Schleifmittel in die Oberfläche eingearbeitet werden.

Aus der DE 102 28 743 A1 ist ein Verfahren zum Glätten und Polieren von Oberflächen durch Bearbeitung mit energetischer Strahlung bekannt, bei dem die zu glättende Oberfläche unter Einsatz der energetischen Strahlung umgeschmolzen wird, um die Glättung zu erreichen. Die Bearbeitung erfolgt dabei durch Abrastern der Oberfläche mittels eines energetischen Strahls, wobei für optimale Glättungsergebnisse die Oberfläche mehrmals nacheinander umgeschmolzen wird. Das Verfahren dieser Druckschrift eignet sich vor allem zur Glättung von Metalloberflächen. Es wird jedoch auch vorgeschlagen, das Verfahren bei anderen Werkstoffen, beispielsweise bei Werkstücken aus Kunststoff einzusetzen. Allerdings sind die Glättungsergebnisse bei vielen Kunststoffen, insbesondere auch bei Kunststoffbauteilen, die durch additive Fertigung erhalten wurden, nicht zufriedenstellend.

Die Aufgabe der vorliegenden Erfindung besteht darin, ein Verfahren zum Glätten eines Oberflächenbereiches eines Kunststoffbauteils anzugeben, das bei additiv gefertigten Kunststoffbauteilen bessere Glättungsergebnisse erzielt und nicht die Nachteile der oben angeführten Glättungsverfahren aufweist.

### Darstellung der Erfindung

Die Aufgabe wird mit dem Verfahren gemäß Patentanspruch 1 gelöst. Vorteilhafte Ausgestaltungen des Verfahrens sind Gegenstand der abhängigen Patentansprüche oder lassen sich der nachfolgenden Beschreibung sowie den Ausführungsbeispielen entnehmen.

Bei dem vorgeschlagenen Verfahren zum Glätten eines Oberflächenbereiches eines Kunststoffbauteils wird der zu glättende Oberflächenbereich mit energetischer Strahlung bearbeitet, um den Oberflächenbereich in einer Randschicht umzuschmelzen (= aufschmelzen und wieder erstarren). Das Verfahren zeichnet sich dadurch aus, dass bei der Bearbeitung jeweils ein Flächenabschnitt von > 25 mm² unter Bildung eines zusammenhängenden Schmelzbades durch die energetische Strahlung aufgeschmolzen wird, wobei sich das Schmelzbad über den gesamten Flächenabschnitt erstreckt. Der Flächenabschnitt kann dabei dem gesamten zu glättenden Oberflächenbereich oder nur einem Teilbereich entsprechen. Bei einem Teilbereich werden dann nacheinander mehrere dieser Flächenabschnitte unter Bildung jeweils eines zusammenhängenden Schmelzbades aufgeschmolzen bis der gesamte Oberflächenbereich abgedeckt ist. Unter dem Schmelzbad wird dabei ein Bereich verstanden, in dem der Kunststoff auf einen Wert oberhalb der Glasübergangstemperatur T_{G} erhitzt ist, bei dem er eine für das Ausfließen der Oberflächenrauigkeit ausreichend niedrige Viskosität aufweist. Bei dem Verfahren wird somit eine dünne Randschicht des Kunststoffbauteils aufgeschmolzen und die Oberfläche im flüssigen oder zumindest ausreichend viskosen Zustand durch die Oberflächenspannung geglättet. Durch Gewährleistung eines großen zusammenhängenden Schmelzbades von > 25 mm² wird ein besonders gutes Glättungsergebnis erzielt. Die Besonderheit bei der Glättung von additiv gefertigten Kunststoffbauteilen besteht darin, dass neben der Reduzierung der Oberflächenrauheit auch Poren und Oberflächendefekte mit dem Verfahren beseitigt werden.

Gemäß der Erfindung wird das zusammenhängende Schmelzbad jeweils für eine Haltedauer von mindestens 5 s aufrechterhalten. Diese Haltedauer hängt vom gewünschten Glättungsergebnis und der Viskosität des Schmelzbades des Kunststoffes ab, aus dem das Kunststoffbauteil gebildet ist.

Der jeweilige Flächenabschnitt kann entweder vollflächig mit der energetischen Strahlung bestrahlt werden, im Falle von Laserstrahlung beispielsweise durch starke Aufweitung eines Laserstrahls mit einer geeigneten Optik, oder mit wenigstens einem energetischen Strahl abgetastet werden, der entlang einer oder mehrerer, vorzugsweise nebeneinander liegender und/oder teilweise überlappender, Bahnen über den jeweiligen Flächenabschnitt geführt wird. Der Strahl kann hierzu kollimiert und/oder fokussiert werden, so dass der Strahldurchmesser auf der zu glättenden Oberfläche zwischen 100 µm und 10 mm beträgt, je nach Größe des Flächenabschnittes und Bearbeitungs- bzw. Scanstrategie. Im Falle eines ausreichend großen Strahldurchmessers auf der Oberfläche wird mit dem Strahldurchmesser selbst in der Regel bereits ein Flächenabschnitt von > 25 mm² aufgeschmolzen. Der Strahl wird dann auf entsprechenden, beispielsweise mäanderförmigen, Bahnen mit zur Gewährleistung der Haltedauer geeignet langsamer Geschwindigkeit über die zu glättende Oberfläche geführt. Im Falle eines kleineren Strahldurchmessers wird der Strahl mit demgegenüber deutlich höherer Geschwindigkeit auf entsprechenden Bahnen über den jeweiligen Flächenabschnitt geführt, um das zusammenhängende Schmelzbad in diesem Flächenabschnitt zu erzeugen.

Vorzugsweise wird das vorgeschlagene Verfahren mit Laserstrahlung durchgeführt. Es können jedoch anstelle von Laserstrahlung auch andere Arten energetischer Strahlung, beispielsweise Mikrowellenstrahlung, Elektronenstrahlung oder Infrarotstrahlung, eingesetzt werden.

In einer bevorzugten Ausgestaltung wird ein energetischer Strahl, insbesondere ein Laserstrahl, mehrfach, beispielsweise > 10fach, > 100fach oder > 1000fach, entlang der Bahnen über jeden Flächenabschnitt geführt, um den jeweiligen Flächenabschnitt aufzuschmelzen und das Schmelzbad für die gewünschte Haltezeit aufrechtzuerhalten. Bei Nutzung eines Laserstrahls kann eine kontinuierliche, eine gepulste oder eine zeitlich modulierte Laserstrahlquelle eingesetzt werden. Die Laserstrahlung muss eine geeignete Wellenlänge aufweisen, um im zu bearbeitenden Material oberflächennah absorbiert zu werden. Dies wird vorzugsweise durch Verwendung einer CO₂-Laserstrahlquelle erreicht. Die Strahlung wird vorzugsweise senkrecht auf die zu glättende Oberfläche gerichtet. Eine schräge Bestrahlung ist jedoch ebenfalls möglich. Bei Einsatz eines Laserstrahls wird vorzugsweise der Strahldurchmesser auf der zu glättenden Oberfläche mit Hilfe einer Fokussierlinse eingestellt. Der Strahldurchmesser (auf der Oberfläche) kann im Bereich zwischen 100 µm und 10 mm liegen, bevorzugt im Bereich zwischen 2 mm und 10 mm. Während der Bearbeitung wird der Strahl mit Hilfe von Spiegeln und/oder Maschinenachsen über die Oberfläche geführt. Die bei der Bearbeitung eingesetzte Scanstrategie kann zum Beispiel, aber nicht ausschließlich, unidirektional oder bidirektional sein. Die Scangeschwindigkeit liegt vorzugsweise im Bereich von 100 mm/s bis 10000 mm/s, besonders bevorzugt im Bereich zwischen 3000 mm/s und 10000 mm/s. Die höheren Scangeschwindigkeiten in diesem Bereich ermöglichen eine homogenere Temperaturverteilung innerhalb des Scanbereiches. Typische Laserleistungen liegen im Bereich von 1 W bis 1000 W, der bevorzugte Leistungsbereich liegt zwischen 10 W und 100 W.

Anstelle konstanter Prozessparameter, wie bspw. Leistung der energetischen Strahlung, Scangeschwindigkeit im Falle der Nutzung eines energetischen Strahls usw., im gesamten Prozess kann auch eine Variation bzw. Anpassung einzelner Prozessparameter während des Prozesses erfolgen, um das Glättungsergebnis zu verbessern. So kann beispielsweise während der Bearbeitung die Temperatur der zu glättenden Oberfläche oder des jeweiligen Flächenabschnitts gemessen und durch eine geeignete Regelung der Leistung der energetischen Strahlung konstant gehalten werden, insbesondere die Temperatur des Schmelzbades. Im Falle eines Laserstrahls kann somit die Laserleistung oder anstelle der Laserleistung auch die Scangeschwindigkeit entsprechend angepasst werden. Ein weiteres Beispiel ist die Anpassung der Anzahl der Umschmelzvorgänge über die zu glättende Oberfläche an die Oberflächenrauheit. Dabei wird die Oberfläche mehrfach nacheinander umgeschmolzen (= aufgeschmolzen und wieder erstarrt) und nach einer bestimmten Anzahl von Umschmelzvorgängen vermessen. Auf Grundlage der dann vorhandenen Restrauheit und der gewünschten Zielrauheit wird die Anzahl der weiteren Umschmelzvorgänge festgelegt. Dies kann auch in mehreren Iterationsschritten erfolgen.

Die oben angeführte Temperaturregelung kann durch Erfassung der Oberflächentemperatur mit einem optischen Temperaturmessverfahren erfolgen, beispielsweise mittels Pyrometrie oder Thermografie. Die Temperaturregelung kann auch so durchgeführt werden, dass ein festgelegter Oberflächentemperaturverlauf erzielt wird. Die Temperaturregelung kann durch Messung der Oberflächentemperatur an einer festen Position der Oberfläche stattfinden oder unter Verwendung einer Zeilen- oder Flächenthermokamera auch durch Messung an mehreren Positionen der Oberfläche gleichzeitig. Dies kann insbesondere bei komplexeren Oberflächen von Vorteil sein, bei denen an verschiedenen Positionen unterschiedliche Wärmeleitungseigenschaften vorhanden sind.

Das Verfahren lässt sich besonders zur Glättung eines oder mehrerer Oberflächenbereiche von Kunststoffbauteilen einsetzen, die eine Oberflächenbeschaffenheit aufweisen, wie sie unmittelbar nach einer additiven Fertigung des Kunststoffbauteils, insbesondere mittels SLS oder FDM, ohne weitere Oberflächenbearbeitung erhalten wird. Auch Kunststoffbauteile mit einem Oberflächenzustand nach einem anderen Herstellungsverfahren zur Formgebung des Bauteils sind selbstverständlich möglich. Das Verfahren eignet sich grundsätzlich zur Glättung von Kunststoffbauteilen aus einem thermoplastischen Kunststoff, beispielsweise eines Kunststoffbauteils aus PA12, PA6, PLA, PP, PC oder PEEK.

Das Verfahren eignet sich besonders gut für Kunststoffbauteile mit einer Oberflächenrauheit, die zwischen Sa = 1 µm und Sa = 25 µm liegt. Die mit dem Verfahren hierbei erreichbare Zielrauheit liegt zwischen Sa = 0,1 µm und Sa = 2 µm. Zwischen der minimal erreichbaren Rauheit und der Ausgangsrauheit lassen sich natürlich je nach Wahl der Haltedauer beliebige Rauheitswerte erreichen.

In einer vorteilhaften Ausgestaltung wird ein Kunststoffbauteil geglättet, das aus einem thermoplastischen Material besteht, dem ein Additiv beigefügt wurde, das die Viskosität des thermoplastischen Materials in einem bestimmten Temperaturbereich verringert, ohne die additive Fertigung des Kunststoffbauteils zu beeinflussen. Der Temperaturbereich kann dabei beispielsweise so gewählt werden, dass er bei der additiven Fertigung nicht erreicht wird. Bei dem vorgeschlagenen Verfahren wird das Schmelzbad dann auf eine Temperatur in diesem Temperaturbereich gebracht, wodurch die Glättung des Oberflächenbereichs mit dem vorgeschlagenen Verfahren beschleunigt wird.

Das vorgeschlagene Verfahren lässt sich sehr vorteilhaft für die Nachbearbeitung von additiv gefertigten Kunststoffbauteilen einsetzen und kann entweder alternativ oder zusätzlich zu anderen Oberflächennachbearbeitungen durchgeführt werden. Hauptanwendungsgebiet ist die Glättung der Oberfläche zur Reduzierung der Rauheit und zum Verschließen von Poren und Oberflächendefekten in derartigen Kunststoffbauteilen. Das Verfahren kann hierbei auch Teil einer Prozesskette zur Nachbearbeitung additiv gefertigter Kunststoffbauteile sein, beispielsweise einer Prozesskette aus Vorschleifen, Laserglätten gemäß dem vorgeschlagenen Verfahren und anschließendem Lackieren. Das Verfahren kann auch zusammen mit dem Druckprozess der additiven Fertigung in einer gemeinsamen Maschine stattfinden. Das Verfahren lässt sich natürlich auch mit Kunststoffbauteilen durchführen, die mit anderen Herstellungsverfahren erzeugt wurden.

Das vorliegende Verfahren bietet den Vorteil einer hohen Glättungsqualität von additiv gefertigten Kunststoffbauteilen, bietet unter anderem die Möglichkeit der selektiven Glättung, vermeidet umwelt- oder gesundheitsschädliche Materialien und eine Einarbeitung von Poliermitteln in die Oberfläche. Weiterhin ist das Verfahren geometrisch unabhängig, lässt sich also für beliebig geformte Kunststoffbauteile einsetzen.

### Kurze Beschreibung der Zeichnungen

Das vorgeschlagene Verfahren wird nachfolgend anhand von Ausführungsbeispielen in Verbindung mit den Zeichnungen nochmals beispielhaft erläutert. Hierbei zeigen:
- Fig. 1: eine schematische Darstellung eines zu glättenden Oberflächenbereiches in Draufsicht, in der beispielhaft Flächenabschnitte gemäß dem vorgeschlagenen Verfahren angedeutet sind;
- Fig. 2: ein Beispiel für die Abtastung eines Flächenabschnittes der Figur 1 mit einem Laserstrahl; und
- Fig. 3: eine weitere schematische Darstellung eines zu glättenden Oberflächenbereiches in Draufsicht, in der ein mit einem Laserstrahl aufgeschmol-zener Flächenabschnitt gemäß einer anderen Ausgestaltung des vorgeschlagenen Verfahrens dargestellt ist.

### Wege zur Ausführung der Erfindung

Das vorgeschlagene Verfahren wird im Folgenden anhand von zwei Ausführungsbeispielen nochmals erläutert, bei denen zur Glättung eines Oberflächenbereiches eines Kunststoffbauteils ein Laserstrahl eingesetzt wird, der auf nebeneinander liegenden Bahnen über den zu glättenden Oberflächenbereich geführt wird. Der Bahn- bzw. Spurabstand kann bei unidirektionaler oder bidirektionaler Scanstrategie hierbei zwischen 1 µm und 1000 µm liegen, liegt jedoch bevorzugt zwischen 50 µm und 300 µm. Der Spurabstand und die Scangeschwindigkeit werden dabei ausreichend groß gewählt, so dass der gesamte zu glättende Oberflächenbereich durch das Abtasten bzw. Scannen der Oberfläche mit dem Laserstrahl homogen aufgeheizt und aufgeschmolzen wird. Die Anzahl der Überfahrten über dem jeweiligen Flächenabschnitt hängt hauptsächlich von der verwendeten Scangeschwindigkeit und der gewünschten Haltedauer ab. Dabei werden typischerweise mehrere Überfahrten pro Sekunde ausgeführt. Die Anzahl der Umschmelzvorgänge über den gesamten Oberflächenbereich wird in Abhängigkeit von der gewünschten Zielrauhigkeit so groß gewählt, dass diese Zielrauhigkeit erreicht wird. Bei mehr als einem Umschmelzvorgang über den zu glättenden Oberflächenbereich kann als zusätzlicher Prozessparameter die Pause zwischen den einzelnen Umschmelzvorgängen gewählt werden. Diese kann zwischen 0 s (keine Pause) und 60 s liegen. Eine Pause zwischen den Umschmelzvorgängen kann bei manchen Materialien und/oder bei nicht-verwenden einer Temperaturregelung von Vorteil sein, damit die Oberfläche zwischen den Umschmelzvorgängen ausreichend abkühlt, um eine Überhitzung der Oberfläche zu vermeiden und eine konstante Temperatur bzw. einen vorgegebenen Temperaturverlauf zu gewährleisten. Bei Nutzung von gepulster Laserstrahlung lassen sich neben der Laserleistung, der Scangeschwindigkeit, dem Spurabstand sowie dem Strahldurchmesser zusätzlich die Prozessparameter der Pulsdauer, die typischerweise zwischen 1 µs und 1000 µs liegt, und der Repetitionsrate, die typischerweise zwischen 100 Hz und 150 kHz liegt, geeignet wählen.

Bei dem vorgeschlagenen Verfahren wird der zu glättende Oberflächenbereich mit dem Laser flächig aufgeschmolzen, indem jeweils in einem Flächenabschnitt von > 25 mm² ein zusammenhängendes Schmelzbad erzeugt wird, das den gesamten Flächenabschnitt überdeckt. Der Flächenabschnitt kann dabei je nach Größe des Oberflächenbereiches auch den gesamten Oberflächenbereich überdecken. Bei mehreren Flächenabschnitten werden diese mit dem Laserstrahl nacheinander unter Bildung des jeweiligen zusammenhängenden Schmelzbades umgeschmolzen.

Die untere Grenze der Temperatur, auf die der jeweilige Flächenabschnitt mit dem Laserstrahl erhitzt werden muss, ist der sogenannte T_{G}-Wert. Typische Temperaturen für diesen T_{G}-Wert liegen bei 40°C bis 200°C, können aber auch außerhalb dieses Bereiches liegen. Die obere Grenze der Temperatur ist die Verdampfungstemperatur bzw. - je nach Kunststoff - die Temperatur, bei der Zersetzungsprozesse beginnen. Typische Werte liegen hierbei zwischen 100°C und 500°C, können aber auch außerhalb dieses Bereiches liegen. Der Temperaturbereich, auf den die Oberfläche mit der Laserstrahlung oder anderer energetischer Strahlung bei dem vorgeschlagenen Verfahren erhitzt wird, liegt daher im Bereich zwischen 40°C und 500°C, vorzugsweise zwischen 100°C und 400°C, und hängt hauptsächlich von den Materialeigenschaften des verwendeten Kunststoffmaterials ab.

Die notwendige Haltedauer des Schmelzbades ist hauptsächlich von der Viskosität des Schmelzbades des Kunststoffmaterials abhängig und liegt bei niederviskosen Kunststoffen wie z.B. PA12 im Bereich zwischen 5 s und 100 s, bei hochviskosen Kunststoffen wie beispielsweise PEEK bei 10 Minuten bis 100 Minuten. Für diese Zeit wird das jeweilige zusammenhängende Schmelzbad jeweils mit Hilfe der eingesetzten energetischen Strahlung aufrechterhalten. Die Rauheit wird während der Haltedauer des Schmelzbades stetig reduziert. Die Haltedauer kann daher in Abhängigkeit von der Ausgangsrauheit und der gewünschten Zielrauheit gewählt werden.

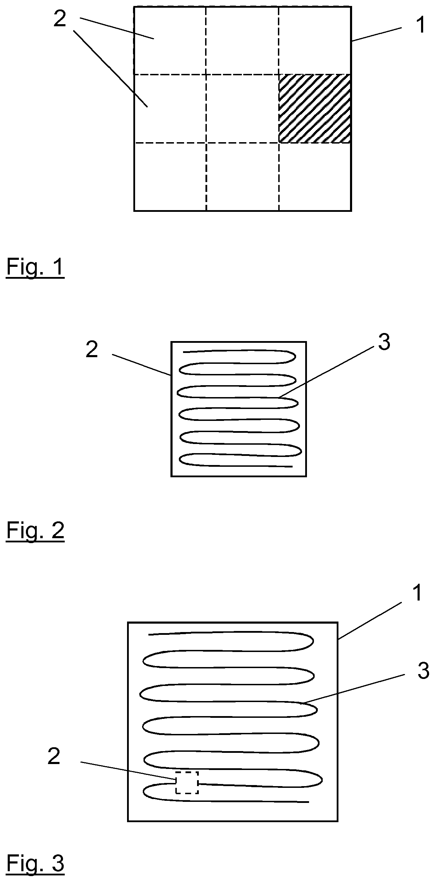

Die Erzeugung des jeweils zusammenhängenden Schmelzbades über einen Flächenabschnitt von > 25 mm² kann sowohl durch einen entsprechend großflächigen Laserspot, durch eine Belichtungsmaske oder auch durch Abscannen des jeweiligen Flächenabschnitts mit einem kleineren Laserspot erfolgen. Figur 1 zeigt hierzu beispielhaft einen zu glättenden Oberflächenbereich 1 in Draufsicht. In diesem Beispiel werden mit einem Laserstrahl nacheinander Flächenabschnitte 2 dieser Oberfläche umgeschmolzen, in die der Oberflächenbereich 1 unterteilbar ist. Jeder einzelne Flächenabschnitt 2 wird hierbei im vorliegenden Beispiel mit einem Laserspot abgescannt, der kleiner als der Flächenabschnitt 2 ist. Dies ist in Figur 2 durch eine mäanderförmige Bahn 3 angedeutet, entlang der der Laserstrahl mehrfach geführt wird. Bei diesem Abscannen wird der Laserspot sehr schnell in zahlreichen aufeinanderfolgenden Überfahrten über den Flächenabschnitt 2 bewegt, um ein zusammenhängendes Schmelzbad zu erzeugen, das den gesamten Flächenabschnitt 2 überdeckt, und für einen ausreichend langen Zeitraum aufrechtzuerhalten. Dabei kann der Strahldurchmesser des Laserspots zwischen 500 µm und 10 mm liegen - abhängig von der Größe des Flächenabschnitts 2. Die Scangeschwindigkeit sollte hierbei in einem Bereich zwischen 1 m/s und 10 m/s liegen. Am Ende jeder Überfahrt wird sofort die nächste Überfahrt gestartet, solange bis die eingestellte Haltedauer bzw. Haltezeit erreicht ist. In dem vorliegenden Beispiel ist eine mäanderförmige Bahn gezeigt. Der Laserstrahl kann jedoch auch in anderen Bahnen über den Flächenabschnitt geführt werden. Hierzu können unterschiedliche Scanstrategien eingesetzt werden, durch die gegebenenfalls die Homogenität der Oberflächentemperatur verbessert wird.

Weiterhin besteht auch die Möglichkeit, einen Laserstrahl mit einem Laserspot einzusetzen, der einen ausreichend großen Durchmesser aufweist, um bereits ohne Scanbewegung einen Flächenabschnitt von > 25mm² aufzuschmelzen. Figur 3 zeigt hierzu wiederum in Draufsicht einen zu glättenden Oberflächenbereich 1, in dem ein Flächenabschnitt 2 von > 25 mm² gezeigt ist, der mit einem ausreichend großflächigen Laserspot (größer als der Flächenabschnitt 2) erzeugt wurde. Durch Bewegung des Laserstrahls bzw. Laserspots auf entsprechenden Bahnen 3 über den Oberflächenbereich 1 werden dann nacheinander entsprechende Flächenabschnitte umgeschmolzen, bis der gesamte Oberflächenbereich umgeschmolzen ist. Die Scangeschwindigkeit muss hierzu geringer gewählt werden als bei dem Beispiel der Figuren 1 und 2, um die jeweilige Haltedauer des Schmelzbades zu erreichen.

### Bezugszeichenliste

- 1: zu glättender Oberflächenbereich
- 2: Flächenabschnitt
- 3: Bahnen des Laserstrahls

## Patentansprüche

1. Verfahren zum Glätten eines Oberflächenbereichs eines Kunststoffbauteils, insbesondere eines additiv gefertigten Kunststoffbauteils, bei dem der zu glättende Oberflächenbereich (1) mit energetischer Strahlung bearbeitet wird, um den Oberflächenbereich (1) in einer Randschicht umzuschmelzen,
**dadurch gekennzeichnet, dass**:
- bei der Bearbeitung jeweils ein Flächenabschnitt (2) von > 25 mm² unter Bildung eines zusammenhängenden Schmelzbades durch die energetische Strahlung aufgeschmolzen wird, das sich über den gesamten Flächenabschnitt (2) erstreckt, und
- das zusammenhängende Schmelzbad jeweils für eine Haltedauer aufrechterhalten wird, die wenigstens 5 s beträgt.

2. Verfahren nach Anspruch 1,
**dadurch gekennzeichnet,**
**dass** der jeweilige Flächenabschnitt (2) vollflächig mit der energetischen Strahlung bestrahlt wird.

3. Verfahren nach Anspruch 1,
**dadurch gekennzeichnet,**
**dass** die Bearbeitung mit wenigstens einem Strahl der energetischen Strahlung erfolgt, der entlang einer oder mehrerer Bahnen (3) über den jeweiligen Flächenabschnitt (2) geführt wird.

4. Verfahren nach Anspruch 3,
**dadurch gekennzeichnet,**
**dass** der wenigstens eine Strahl mit einer Geschwindigkeit entlang der Bahn(en) (3) geführt wird, die zwischen 100 mm/s und 10000 mm/s beträgt.

5. Verfahren nach Anspruch 3 oder 4,
**dadurch gekennzeichnet,**
**dass** der wenigstens eine Strahl mit einem Strahldurchmesser entlang der Bahn(en) (3) geführt wird, der zwischen 100 µm und 10 mm beträgt.

6. Verfahren nach einem der Anspruche 3 bis 5,
**dadurch gekennzeichnet,**
**dass** der wenigstens eine Strahl mehrfach entlang der Bahnen (3) geführt wird, um den jeweiligen Flächenabschnitt (2) aufzuschmelzen und das Schmelzbad für eine oder die Haltedauer aufrechtzuerhalten.

7. Verfahren nach einem der Anspruche 1 bis 6,
**dadurch gekennzeichnet,**
**dass** der jeweilige Flächenabschnitt (2) mit der energetischen Strahlung auf eine Temperatur aufgeheizt wird, um das Schmelzbad zu erzeugen, die zwischen 40°C und 500°C liegt.

8. Verfahren nach einem der Ansprüche 1 bis 7,
**dadurch gekennzeichnet,**
**dass** kontinuierliche, gepulste oder zeitlich modulierte Laserstrahlung als energetische Strahlung eingesetzt wird.

9. Verfahren nach Anspruch 8,
**dadurch gekennzeichnet,**
**dass** ein CO₂-Laser eingesetzt wird, um die Laserstrahlung zu erzeugen.

10. Verfahren nach einem der Ansprüche 1 bis 9,
**dadurch gekennzeichnet,**
**dass** eine Oberflächentemperatur des zu glättenden Oberflächenbereiches (1) in dem Flächenabschnitt (2) während der Bearbeitung erfasst und wenigstens ein die Oberflächentemperatur beeinflussender Bearbeitungsparameter in Abhängigkeit der erfassten Oberflächentemperatur während der Bearbeitung geregelt wird, um einen vorgebbaren Verlauf der Oberflächentemperatur, insbesondere eine konstante Schmelzbadtemperatur, während der Bearbeitung zu erhalten.

11. Verfahren nach einem der Ansprüche 1 bis 10,
**dadurch gekennzeichnet,**
**dass** der zu glättende Oberflächenbereich (1) mehrmals nacheinander mit der energetischen Strahlung umgeschmolzen wird.

12. Verfahren nach einem der Ansprüche 1 bis 11 zum Glätten eines Oberflächenbereichs (1) eines Kunststoffbauteils, der eine Struktur aufweist, wie sie unmittelbar nach einer additiven Fertigung des Kunststoffbauteils, insbesondere mittels SLS oder FDM, erhalten wird.

13. Verfahren nach Anspruch 12,
**dadurch gekennzeichnet,**
**dass** das Kunststoffbauteil aus einem thermoplastischen Material besteht, dem ein Additiv beigefügt wurde, das eine Viskosität des thermoplastischen Materials in einem Temperaturbereich verringert, ohne die additive Fertigung des Kunststoffbauteils zu beeinflussen, wobei das Schmelzbad bei der Bearbeitung durch die energetische Strahlung auf eine Temperatur innerhalb dieses Temperaturbereiches gebracht wird.

14. Verfahren nach einem der Ansprüche 1 bis 11 zum Glätten eines Oberflächenbereichs (1) eines Kunststoffbauteils mit einer Oberflächenrauheit, die zwischen Sa = 1 µm und Sa = 25 µm liegt.

## Claims

1. A method for smoothing the surface of a plastic component, in particular a plastic component manufactured additively, in which the surface (1) to be smoothed is processed with energetic radiation in order to remelt the surface (1) in a boundary layer,
**characterized in that**
- during processing, one surface section (2) of > 25 mm² in each case is melted by the energetic radiation, thereby forming a continuous melting bath which extends over the entire surface section (2), and
- the continuous melting bath is maintained for a holding period lasting at least 5 s in each case.

2. The method according to Claim 1,
**characterized in that**
the respective surface section (2) is irradiated with the energetic radiation over the entire area thereof.

3. The method according to Claim 1,
**characterized in that**
processing is performed with at least one beam of the energetic radiation, which is guided over the respective surface section (2) along one or more paths (3) .

4. The method according to Claim 3,
**characterized in that**
the at least one beam is guided along the path(s) (3) at a speed between 100 mm/s and 10,000 mm/s.

5. The method according to Claim 3 or 4,
**characterized in that**
the at least one beam is guided along the path(s) (3) with a beam diameter between 100 µm and 10 mm.

6. The method according to any one of Claims 3 to 5,
**characterized in that**
the at least one beam is guided along the paths (3) multiple times in order to melt the respective surface section (2) and to maintain the melting bath for a holding period or the holding period.

7. The method according to any one of Claims 1 to 6,
**characterized in that**
the respective surface section (2) is heated with the energetic radiation up to a temperature between 40 °C and 500 °C in order to create the melting bath.

8. The method according to any one of Claims 1 to 7,
**characterized in that**
the continuous, pulsed or time-modulated laser radiation is used as the energetic radiation.

9. The method according to Claim 8,
**characterized in that**
a CO₂ laser is used to generate the laser radiation.

10. The method according to any one of Claims 1 to 9,
**characterized in that**
a surface temperature in the surface section (2) of the surface (1) to be smoothed is captured during processing, and at least one processing parameter that influences the surface temperature is regulated during processing as a function of the captured surface temperature in order to obtain a definable course of the surface temperature, in particular a constant melting bath temperature during processing.

11. The method according to any one of Claims 1 to 10,
**characterized in that**
the surface (1) to be smoothed is remelted multiple times consecutively with the energetic radiation.

12. The method according to any one of Claims 1 to 11 for smoothing a surface (1) of a plastic component which has a structure such as is obtained immediately after additive manufacturing of the plastic component, in particular using SLS or FDM.

13. The method according to Claim 12,
**characterized in that**
the plastic component is made from a thermoplastic material to which an additive was added that lowers a viscosity of the thermoplastic material in a temperature range without influencing the additive manufacture of the plastic component, wherein the melting bath is brought to a temperature within this temperature range by the energetic radiation during the processing.

14. The method according to any one of Claims 1 to 11 for smoothing a surface (1) of a plastic component having a surface roughness between Sa = 1 µm and Sa = 25 µm.

## Revendications

1. Procédé de lissage d'une surface d'un composant en plastique, en particulier d'un composant en plastique fabriqué de manière additive, dans lequel la surface (1) à lisser est traitée avec un rayonnement énergétique pour faire fondre la surface (1) en une couche de bordure,
**caractérisé en ce que** :
- lors du traitement, une section de surface (2) est fondue de >25 mm² par le rayonnement énergétique pour former un bain de fusion cohésif qui s'étend sur toute la section de surface (2), et
- le bain de fusion cohésif est maintenu pendant une durée de maintien d'au moins 5 s.

2. Procédé selon la revendication 1,
**caractérisé en ce que** la section de surface respective (2) est irradiée sur toute la surface avec le rayonnement énergétique.

3. Procédé selon la revendication 1,
**caractérisé en ce que** le traitement est effectué avec au moins un faisceau de rayonnement énergétique projeté le long d'une ou plusieurs voies (3) au-dessus du la section de surface (2).

4. Procédé selon la revendication 3,
**caractérisé en ce que** le au moins un faisceau est guidé avec une vitesse le long de la ou des voie (s) (3) est réalisée, qui est comprise entre 100 mm/s et 10000 mm/s.

5. Procédé selon la revendication 3 ou 4,
**caractérisé en ce que** le au moins un faisceau est guidé avec un diamètre du faisceau le long de la ou des voie (s) (3), qui est comprise entre 100 µm et 10 mm.

6. Procédé selon une des revendications 3 à 5,
**caractérisé en ce que** le au moins un faisceau est guidé plusieurs fois le long des trajets (3) afin de faire fondre la section de surface respective (2) et de maintenir le bain de fusion pour une ou les période.

7. Procédé selon une des revendications 1 à 6,
**caractérisé en ce que** la section de surface respective (2) est chauffée à une température comprise entre 40 °C et 500 °C avec le rayonnement énergétique afin de générer le bain de fusion.

8. Procédé selon une des revendications 1 à 7,
caractérisé en ce le rayonnement laser continu, modulé de manière impulsée ou temporisée est utilisé comme rayonnement énergétique.

9. Procédé selon la revendication 8,
**caractérisé en ce qu'**un laser CO₂ est utilisé pour générer le rayonnement laser.

10. Procédé selon une des revendications 1 à 9, **caractérisé en ce qu'**une température de surface de la surface à lisser (1) est détectée pendant le traitement dans la section de surface (2) et au moins un paramètres de traitement affectant la température de surface dépendant de la température de surface détectée est régulé pendant le traitement afin d'obtenir un profil prédéfinissable de la température de surface, en particulier une température constante du bain de fusion, pendant le traitement.

11. Procédé selon une des revendications 1 à 10,
**caractérisé en ce que** la surface (1) à lisser est refondue plusieurs fois de suite à l'aide du rayonnement énergétique.

12. Procédé selon une quelconque des revendications 1 à 11 pour le lissage d'une surface (1) d'un composant en plastique, qui présente une structure telle qu'elle soit obtenue immédiatement après la fabrication additive du composant plastique, notamment au moyen de SLS ou FDM.

13. Procédé selon la revendication 12,
**caractérisé en ce que** le composant en plastique est constitué d'un matériau thermoplastique, auquel a été ajouté un additif, qui diminue une viscosité du matériau thermoplastique dans une plage de température réduite, sans influer sur la fabrication additive du composant en plastique, dans lequel le bain de fusion est porté à une température dans cette plage de température pendant le traitement par le rayonnement énergétique.

14. Procédé selon une quelconque des revendications 1 à 11 pour lisser une surface (1) d'un composant en plastique ayant une rugosité de surface comprise entre Sa=1 µm et Sa=25 µm.
